# EUROPEAN PATENT APPLICATION

(11) **EP 4 734 310 A1**
(43) Date of publication of application: **29.04.2026**
(21) Application number: 24208576.9
(22) Date of filing: 24.10.2024
(51) Int. Cl.: H02H 9/00

(54) **POWER SUPPLY INPUT CIRCUIT FOR HANDLING INRUSH CURRENTS**

(71) Applicant: Aptiv Technologies AG, 8200 Schaffhausen (CH)
(72) Inventor: Schmidt, Dimitri, 51674 Wiehl (DE)
(74) Representative: Manitz Finsterwald Patent- und Rechtsanwaltspartnerschaft mbB

(57) **Abstract**

A power supply input circuit for handling inrush currents is provided, wherein the power supply input circuit comprises a first terminal and second terminal, wherein the first terminal of the power supply input circuit is connectable to a power source and the second terminal of the power supply input circuit is connectable to another electronic circuit, preferably a power supply circuit and/or an electronic circuit in a vehicle, the power supply input circuit comprising at least one input capacitor, and a switch, wherein the switch is connected to the input capacitor, wherein the switch is configured to switch between an on-state and an off-state such that an inrush current generated by the power source is split into a plurality of pulses, wherein a duration of the on-state of the switch is shorter than a duration of the inrush current.

## Description

### FIELD

The present disclosure relates to a power supply input circuit, power supply system, use of the power supply input circuit, and method for handling inrush currents generated by a power source for charging at least one input capacitor.

### BACKGROUND

Power supply input circuits are often applied in vehicles, particularly automobiles. In certain applications, these power supply input circuits may be subject to inrush currents or, in other words, they may have to handle (that is, limit) inrush currents. An inrush current may also be understood as a charging current for at least one input capacitor.

So far, inrush currents in power supply input circuits have been handled by either one of the following two approaches. First, resistors can be used. This, however, may not be practical for higher current pulses (e.g. higher amplitude and/or longer pulse duration since high-power resistors would be needed, which is cost-intense. The second approach is directed at the use of a field-effect transistor (FET), in particular a metal-oxide-semiconductor field-effect transistor (MOSFET), that may be slowly turned on (i.e. slow increase of the gate voltage). This, however, may result in operating the FET in a current saturation region (i.e. linear mode) for a longer time period, which may lead to a performance degradation, damaging, or even complete destruction of the FET due to high power dissipation.

Accordingly, there is a need to better and/or more efficiently handle inrush currents in power supply input circuits.

### SUMMARY

The present disclosure provides a power supply input circuit, power supply system, use of the power supply input circuit, and method for handling inrush currents according to the independent claims.

Embodiments are given in the subclaims, the description and the drawings.

In one aspect, the present disclosure is directed at a power supply input circuit for handling inrush currents (e.g. generated by a power source and by which at least one input capacitor is charged). The power supply input circuit comprises a first terminal and second terminal, wherein the first terminal of the power supply input circuit is connectable to a power source and the second terminal of the power supply input circuit is connectable to another electronic circuit, preferably a power supply circuit and/or an electronic circuit (e.g. a load) in a vehicle, such as an automobile. The power supply input circuit comprises at least one input capacitor and a switch, wherein the switch is connected to the input capacitor, wherein the switch is configured to switch between an on-state and an off-state (in particular multiple times) such that an inrush current generated by the power source is split into a plurality of pulses, wherein a duration of the on-state of the switch is shorter than a duration of the inrush current.

In other words, the input capacitor is (within a single charging process) charged with or by the plurality of shorter pulses (with pauses between the pulses) rather than a single, longer pulse. The duration of the inrush current may refer to the time it would take, without interruptions and within a single charging process, to charge the input capacitor by the inrush current from an initial charging state to a final charging state (e.g. from 10% or 20% to 80% or 90% of the maximum charging state), and preferably from not being charged to being fully charged. Since the switch operates to (intermittently or alternately) block and let through the inrush current, the charging of the input capacitor can be paused and continued in a controlled manner within a single charging process, wherein preferably no significant de-charging of the capacitor takes place during the time the charging of the input capacitor is paused. Due to the shorter charging pulses (and the pauses between the pulses), the power supply input circuit may be able to withstand higher current spikes of inrush currents. Moreover, the triggering of a fuse or electronic fuse (eFuse) in the application, e.g. an automobile, may be avoided. This way, the power supply input circuit may generally be applicable for high-current applications.

It is to be understood that the power supply input circuit may comprise more than one input capacitor. For example, the power supply input circuit may comprise two, three, four, five or more input capacitors. In that case, the input capacitors may be connected in parallel to ground.

The first terminal and the second terminal of the power supply input circuit may be configured to allow electrical connection, contact and/or conduction between circuit components external to the power supply input circuit and internal circuit components of the power supply input circuit. The first and second terminal may be, for example, formed as a connector, plug, socket, clamp, contact pad, via, solder bump, wire and/or any other suitable interface for allowing electrical contact, connection and/or conduction.

The power source may be a voltage source or current source. The inrush current may be generated, produced and/or caused whenever the power source is switched on. For example, the power source may be a battery of a vehicle such as an automobile. The inrush current may be generated, produced and/or caused whenever the vehicle (and thus, the power source) is switched on or started.

A typical inrush current (i.e. charging current of the input capacitor) may have duration in the range of nanoseconds to milliseconds, and for example, a duration in the range of about 100 ns to 100 ms, preferably in the range of 1 µs to 1 ms. In other words, a typical charging time for an input capacitor may be in the range of about 100 ns to 100 ms, preferably in the range of 1 µs to 1 ms.

The switch may be configured to connect or disconnect a conducting path in the power supply input circuit such that the charging current for the input capacitor is blocked or let through, and in particular interrupted or continued.

The switch may comprise a transistor, such as a field effect transistor (FET) or a metal oxide semiconductor field effect transistor (MOSFET), a thyristor, a relay, a solid-state relay, or another electronic component able to provide a switching function.

The on-state of the switch may mean that the switch is in conducting mode or closed state such that the inrush current can charge the input capacitor. The off-state of the switch may mean that the switch is in blocking (non-conducting) mode or open state such that the inrush current is blocked and/or interrupted (i.e. the input capacitor is not charged).

The inrush current is split (or in other words, divided, separated, partitioned, or otherwise segmented) into a plurality of pulses, each of the pulses being preferably separated from each other by a time period with no inrush current, wherein each of said plurality of pulses has a duration shorter than the duration of the (complete) inrush current (i.e. charging time without interruptions). For example, pulses of the plurality of pulses may have a duration of equal to or less than 1 ms, preferably equal to or less than 100 µs, preferably equal to or less than 50 µs, preferably equal to or less than 10 µs, preferably equal to or less than 1 µs, preferably equal to or less than 100 ns, and more preferably equal to or less than 10 ns. The minimum duration of a pulse of the plurality of pulses may be 1 ns.

The initial amplitude (e.g. in Ampere) of a pulse of the plurality of pulses is preferably equal (within a variation of ± 10%, preferably ± 5%, and more preferably ± 1 %) to the final amplitude of its preceding pulse of the of the plurality of pulses.

The duration of the on-state of the switch may be equal to or less than 1 ms, preferably equal to or less than 100 µs, preferably equal to or less than 50 µs, preferably equal to or less than 10 µs, preferably equal to or less than 1 µs, preferably equal to or less than 100 ns, and more preferably equal to or less than 10 ns. The minimum duration of the on-state of the switch may be 1 ns.

The duty cycle of the switch may be in the range of 0.0001 to 0.9000, preferably in the range of 0.0005 to 0.5000, and more preferably in the range of 0.001 to 0.100. The duty cycle of the switch may preferably be equal to 0.001.

According to an embodiment, the switching period of the switch is equal to or larger than the duration of the inrush current. This way, the stress on the circuit components is reduced (since the time for the circuit components to cool off is increased).

According to an embodiment, the turn-on edge (or rising time) of the on-state of the switch is controlled such that an amplitude of pulses of the plurality pulses is adjusted, preferably reduced.

The turn on-edge may reflect or govern the transition between the off-state and the on-state of the switch. In particular, the turn-on edge may govern of how fast the switch transitions from the off-state to the on-state. For example, the turn-on edge may be influenced by the steepness of an edge or flank of a voltage with which the switch is driven, and vice versa. A shallower turn-on edge (i.e. slower transition between the off-state and the on-state) may lead to a reduction of the amplitude of the pulses of the plurality of pulses in trade-off with stress on and/or power dissipation in the switch.

According to an embodiment, the conducting state of the on-state of the switch is controlled such that the amplitude of pulses of the plurality pulses is adjusted, in particular reduced. For example, the conducting state of the on-state of the switch may be adjusted such that a resistance of or in the conducting path within or through the switch during the on-state of the switch becomes significant (that is, not negligible) or is increased. In another example, the switch may be FET. The conducting state of the on-state of the FET may be controlled by adjusting the amplitude of the gate(-to-source) voltage with which the FET is driven. This way, the amplitude of pulses of the plurality pulses may be adjusted, in particular reduced.

According to an embodiment, a charging time of the input capacitor, i.e. the time it takes (not counting interruption times) until the input capacitor is charged to certain degree, and in particular fully charged, is predetermined or adjustable, wherein the frequency and the duration of the on-state of the switch is selected such that the charging time for the input capacitor is met. The duration of the inrush current may be equivalent to the charging time of the input capacitor.

According to an embodiment, a storage charge (i.e. the charge to be stored) in the input capacitor is predetermined or adjustable, wherein the turn-on edge, the frequency, the duration and/or the conducting state of the on-state of the switch is selected such that the storage charge is met.

According to an embodiment, the switch is configured to switch between an on-state and an off-state with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz. Preferably, the frequency is equal to 10 kHz. The frequency may be predetermined or adjustable.

According to an embodiment, a ratio between the duration of the on-state of the switch and the duration of the inrush current is equal to or smaller than 0.25, preferably equal to or smaller than 0.2, preferably equal to or smaller than 0.1, preferably equal to or smaller than 0.05, preferably equal to or smaller than 0.025, and more preferably equal to or smaller than 0.01.

According to an embodiment, the switch is on one side connectable to the power source and on the other side connected to the input capacitor. The other electronic circuit may be connectable to the switch from the side of the input capacitor. According to an embodiment, the switch is on one side connectable to the power source and on the other side connectable to the other electronic circuit.

According to an embodiment, the switch comprises a first and a second terminal, wherein the first terminal of the switch is connectable to the power source, and wherein the second terminal of the switch is connectable to the other electronic circuit and connected to the input capacitor.

According to an embodiment, the input capacitor is one side connected to the switch and on the other side connected to ground. The other electronic circuit is preferably connectable to the input capacitor from the side of the switch. According to an embodiment, the input capacitor is one side connectable to the other electronic circuit and on the other side connected to ground.

According to an embodiment, the input capacitor comprises a first and a second terminal, wherein the first terminal of the input capacitor is connected to the switch and connectable to the other electronic circuit, and wherein the second terminal of the input capacitor is connected to ground.

According to an embodiment, the switch comprises a field-effect transistor (FET), preferably a metal-oxide-semiconductor field-effect transistor (MOSFET). According to an embodiment, the switch may comprise a fast-switching FET, preferably a fast-switching MOSFET. For example, the switch may comprise an N-channel FET.

The FET may have or be able to only briefly operate in saturation mode or even in conducting mode (not saturation mode) during on-state of the switch. This way, the power dissipation and the risk of damaging the FET (and the other electronic circuit) may be reduced. This way, the power supply input circuit may be usable for high-current applications, e.g. by choosing a fitting FET.

The switch may comprise or be an enhancement-type switch. Preferably, the switch comprises or is an enhancement-type MOSFET such as a P-channel MOSFET or an N-channel MOSFET. P-channel MOSFETs may be more easily operated. Preferably, the switch comprises or is an N-channel MOSFET. The internal structure of N-channel MOSFETs may provide a very low on-state resistance and thus may facilitate the handling of higher currents.

According to an embodiment, the side of the drain of the FET is connectable to the power source and the side of the source of the FET is connected to the input capacitor.

The gate of the FET controls the current flow between the source and drain by varying the electric field within the channel. The gate voltage relative to the source determines whether the FET is in on-state (conducting) or off-state (non-conducting or blocking). This way, the FET can be applied as a switch depending on how the gate voltage is altered.

According to an embodiment, the gate of the FET is driven with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz, in order to have the FET switch between the on-state and the off-state. Preferably, the gate of the FET is driven with a frequency of 10 kHz. This way, the FET is in conducting mode for short periods of time and thus, is able to withstand higher current amplitudes of inrush currents. In other words, the stress on the FET is reduced and therefore, the power supply input circuit may also be usable for high-current applications.

The turn-on edge and/or the frequency with which the FET is actuated may be adjusted to control the charging time of the input capacitor. Since the FET may be able to operate in conduction mode (not saturation mode) the power dissipation of the FET and thereby, the risk of damaging the FET may be reduced. Thereby, the power supply input circuit may be able to accommodate a wider range of applications.

According to an embodiment, the power source comprises a voltage source, wherein the power source preferably comprises a battery for a vehicle, and more preferably an automobile battery.

The approaches disclosed herein may overall offer a high flexibility and may be applicable for a wider range of use cases since the employed switch, e.g. FET, (current capability) and the frequency with which it is actuated (charging time of the input capacitor) can be flexibly adjusted.

In another aspect, the present disclosure is directed at a power supply system comprising a power supply input circuit as described herein and a power source, wherein a switch of the power supply input circuit is connected between the power source and at least one input capacitor of the power supply input circuit.

According to an embodiment, the power source comprises a voltage source, wherein the power source preferably comprises a battery for a vehicle, and more preferably an automobile battery.

The herein described power supply system may be used for and/or a capable of handling inrush currents generated by the power source (and by which at least one input capacitor is charged).

According to an embodiment, the power supply system further comprises another electronic circuit, preferably a power supply circuit and/or an electronic circuit in a vehicle, such as an automobile, wherein the power supply input circuit is connected between the power source and the other electronic circuit.

According to an embodiment, the power source, the switch, and the input capacitor are connected in series in this order.

According to an embodiment, the input capacitor is on one side connected to the switch and the other electronic circuit and on the other side connected to ground.

According to an embodiment, the input capacitor comprises a first and a second terminal, wherein the first terminal of the input capacitor is connected to the switch and connected to the other electronic circuit, and wherein the second terminal of the input capacitor is connected to ground.

According to an embodiment, the switch comprises a first and a second terminal, wherein the first terminal of the switch is connected to the power source, and wherein the second terminal of the switch is connected to the other electronic circuit and the input capacitor.

In another aspect, the present disclosure is directed at a use of the power supply input circuit as described herein for handling inrush currents generated by a power source.

In another aspect, the present disclosure is directed at a method for handling inrush currents (generated by a power source for or when charging at least one input capacitor), comprising: connecting a first terminal of a power supply input circuit to a power source; connecting a switch of the power supply input circuit to at least one input capacitor of the power supply input circuit; and actuating the switch to switch between an on-state and an off-state (in particular multiple times) such that an inrush current generated by the power source is split into a plurality of pulses, wherein a duration of the on-state of the switch is shorter than a duration of the inrush current.

The switch may initially be in off-state.

According to an embodiment, the method comprises connecting the first terminal of the power supply input circuit to the power source and a second terminal of the power supply input circuit to another electronic circuit, preferably a power supply circuit and/or an electronic circuit in a vehicle.

The disclosure comprised herein with respect to the power supply input circuit also applies to the power supply system, the use of the power supply input circuit, and the method. This particularly applies to the embodiments disclosed with respect to the power supply input circuit. It is further noted that the features disclosed herein can also be combined with each other if the contrary is not explicitly stated.

### DRAWINGS

Exemplary embodiments and functions of the present disclosure are described herein in conjunction with the following drawings, wherein
- Fig. 1: shows schematically a power supply system for handling inrush current pulses;
- Fig. 2A: shows graphically a simulated inrush current in a power supply system without a switch;
- Fig. 2B: shows graphically a simulated inrush current in a power supply system with a switch;
- Fig. 3: shows a close-up of the first pulse in the graph of Fig. 2B.

### DETAILED DESCRIPTION

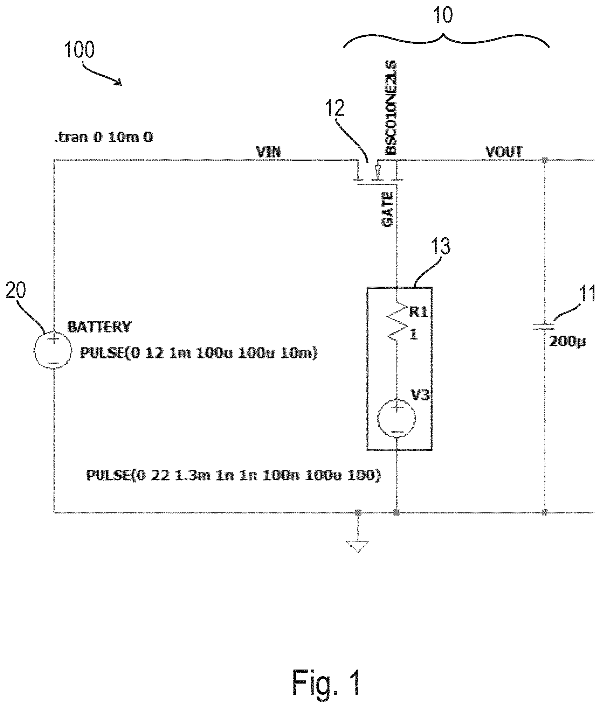

Fig. 1 shows a schematic of a power supply system 100 comprising a power supply input circuit 10 and a power source 20. A switch 12, 13 of the power supply input circuit 10 is connected between the power source 20 and at least one input capacitor 11 of the power supply input circuit 10. The power source 20 may comprise or be a voltage or current source. As an example, the voltage source may be a battery for a vehicle, and more preferably an automobile battery. The power source may be able to provide a voltage with an amplitude of about 12 V. The power source 20 may be configured to generate, produce and/or cause an inrush current.

The power supply input circuit 10 as shown in Fig. 1 comprises a first terminal and second terminal, wherein the first terminal of the power supply input circuit 10 is connected to the power source 20 and the second terminal of the power supply input circuit 10 is connectable to another electronic circuit (not shown in Fig. 1), preferably a power supply circuit and/or an electronic circuit (e.g. a load) in a vehicle, such as an automobile. The power supply input circuit 10 comprises at least one input capacitor 11 and the switch 12, 13, wherein the switch 12, 13 is connected to the input capacitor 11. In particular, the switch 12, 13 may comprise a first and a second terminal, wherein the first terminal of the switch 12, 13 is connected to the power source 20, and wherein the second terminal of the switch 12, 13 is connectable to the other electronic circuit (not shown in Fig. 1) and connected to the input capacitor 11.

The switch 12, 13 is configured to switch between an on-state and an off-state (multiple times) such that an inrush current generated by the power source 20 is split into a plurality of pulses, wherein a duration of the on-state of the switch 12, 13 is shorter than a duration of the inrush current. This way, the power supply system 100, and particularly, the power supply input circuit 10 may be used for and/or a capable of handling inrush currents generated by the power source 20 (by or with which the input capacitor 11 of the power supply input circuit 10 is charged).

As shown in Fig. 1, the switch comprises a MOSFET 12 which is controlled by a gate driver 13, i.e. the gate driver 13 controls or drives the gate of the MOSFET 12. The drain of the MOSFET 12 may be connected to the power source 20 and the source of the MOSFET 12 may be connected to the input capacitor 11. As shown in Fig. 1, the gate driver 13 may comprise a resistor R1 (e.g. with a resistance of 1 Ohm) and a voltage source V3 generating voltage pulses for driving the gate of the MOSFET 12. In an example, the voltage pulses generated by the gate driver 13 may have an amplitude of 22 V, a rise time of 1 ns, a fall time of 1 ns, a duration or pulse width of 100 ns, and a period of 100 µs. In the example, the gate of the MOSFET 12 is driven with a frequency of 10 kHz. This way, the switch is actuated to switch between the on-state and the off-state with a predetermined or adjustable frequency.

The input capacitor 11 may comprise a first and a second terminal, wherein the first terminal of the input capacitor 11 is connected to the MOSFET 12 and connectable to the other electronic circuit (not shown in Fig. 1), and wherein the second terminal of the input capacitor 11 is connected to ground. Even though only one input capacitor 11 is depicted in Fig. 1, the power supply input circuit 10 may also comprise more than one input capacitor 11. For example, the power supply input circuit 10 may comprise two, three, four, five or more input capacitors. In that case, the input capacitors may be connected in parallel to ground. As an example, the capacitance of the input capacitor 11 may be 200 µF.

The power supply system 100 may further comprise the other electronic circuit (not shown in Fig. 1), wherein the power supply input circuit 10 is connected between the power source 20 and the other electronic circuit. The first terminal of the input capacitor 11 may then be connected to the MOSFET 12 of the switch and connected to the other electronic circuit (not shown in Fig. 1), the second terminal of the input capacitor 11 may be connected to ground. Correspondingly, the source of the MOSFET 12 may be connected to the input capacitor 11 and the other electronic circuit.

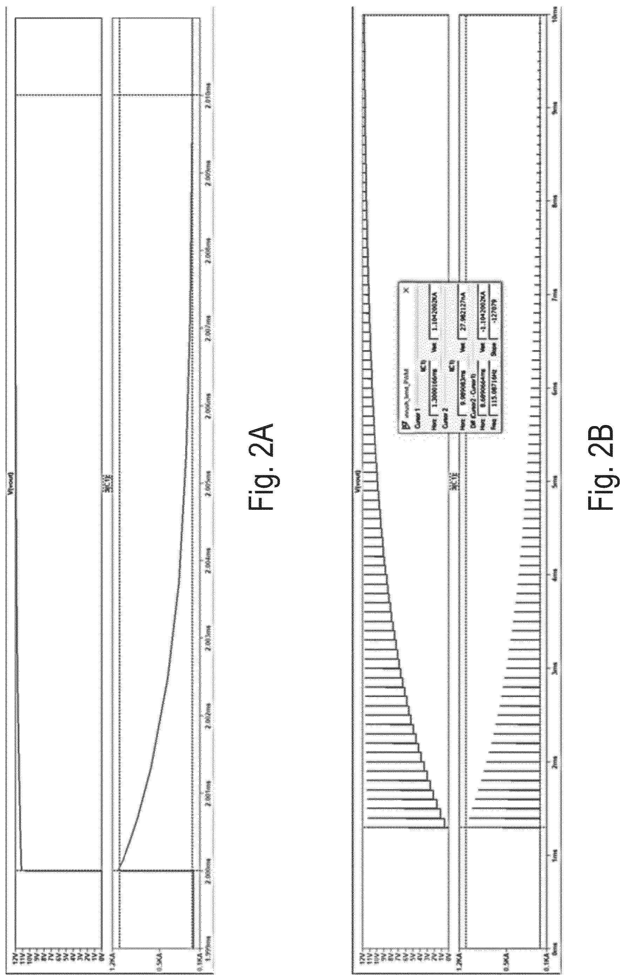

Fig. 2A shows a graph of a simulated inrush current in a power supply system without a switch. The power supply system for the simulation may comprise a similar or the same input capacitor and a power source as shown, for example, in Fig. 1. However, the power supply system for the simulation may not comprise a switch 12, 13 as shown in Fig. 1. The power source may be able to provide a voltage with an amplitude of about 12 V when switched on, which may lead to an inrush current (i.e. charging current for an input capacitor) with a maximum amplitude of about 1.1 kA. As can be seen from Fig. 2A, the inrush current is forwarded through the circuit without limitation and the input capacitor is (fully) charged within a charging time of about 10 µs.

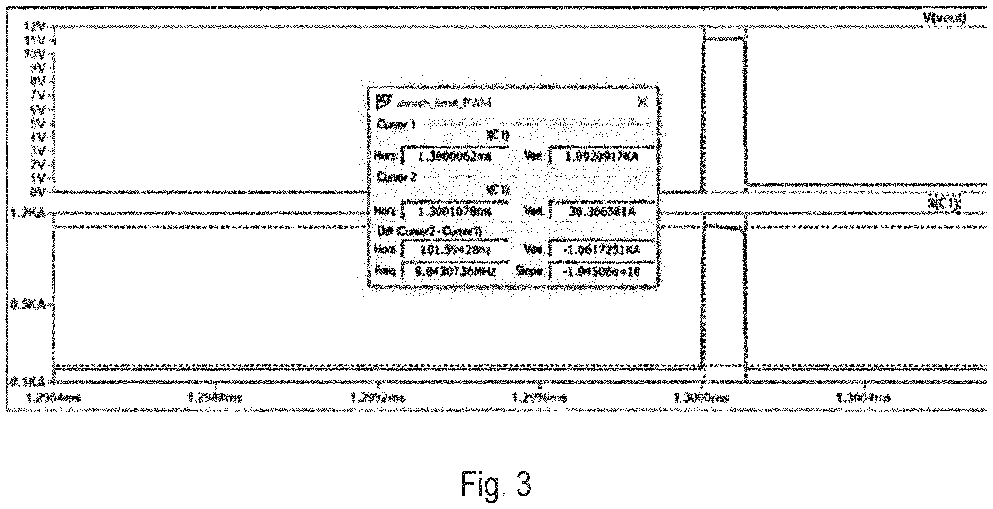

Fig. 2B shows a graph of a simulated inrush current in a power supply system with a switch. Fig. 3 is a close-up of the first pulse in the graph of Fig. 2B. The power supply system for the simulation may comprise the same or similar components as the power supply system shown in Fig. 1. For the simulation, the switch is operated with a frequency of 10 kHz. The inrush current (i.e. effective charging time of the input capacitor) may be 8.7 µs. Due to the actuation of the switch, the inrush current is split into a plurality of pulses (e.g. 87 pulses), wherein each of the plurality of pulses has a duration of 100 ns. As can be seen from Fig. 2B, the overall duration until the input capacitor is fully charged is prolonged to 8.7 ms while the stress on the circuit components may be reduced. This way, the power supply system may be able to better and/or more efficiently handle inrush currents and overall, may be suitable for higher current applications.

### Reference numeral list

- 10: power supply input circuit
- 11: input capacitor
- 12: metal-oxide filed effect transistor (MOSFET)
- 13: gate driver
- 20: power source
- 100: power supply system

## Claims

1. Power supply input circuit (10) for handling inrush currents, wherein the power supply input circuit (10) comprises a first terminal and second terminal, wherein the first terminal of the power supply input circuit (10) is connectable to a power source (20) and the second terminal of the power supply input circuit (10) is connectable to another electronic circuit, preferably a power supply circuit and/or an electronic circuit in a vehicle, the power supply input circuit (10) comprising:
at least one input capacitor (11), and
a switch (12, 13), wherein the switch (12, 13) is connected to the input capacitor (11), wherein the switch (12, 13) is configured to switch between an on-state and an off-state such that an inrush current generated by the power source (20) is split into a plurality of pulses, wherein a duration of the on-state of the switch (12, 13) is shorter than a duration of the inrush current.

2. The power supply input circuit (10) of claim 1, wherein the turn-on edge of the on-state of the switch (12, 13) is controlled such that an amplitude of pulses of the plurality pulses is adjusted, preferably reduced.

3. The power supply input circuit (10) of claim 1 or 2, wherein the charging time of the input capacitor (11) is predetermined or adjustable, wherein the frequency and the duration of the on-state of the switch (12, 13) is selected such that the charging time for the input capacitor (11) is met.

4. The power supply input circuit (10) of any one of the preceding claims, wherein the conducting state of the on-state of the switch (12, 13) is controlled such that the amplitude of pulses of the plurality pulses is adjusted, preferably reduced.

5. The power supply input circuit (10) of any one of the preceding claims, wherein the switch (12, 13) is configured to switch between an on-state and an off-state with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz.

6. The power supply input circuit (10) of any one of the preceding claims, wherein a ratio between the duration of the on-state of the switch (12, 13) and the duration of the inrush current is equal to or smaller than 0.25, preferably equal to or smaller than 0.2, preferably equal to or smaller than 0.1, preferably equal to or smaller than 0.05, preferably equal to or smaller than 0.025, and more preferably equal to or smaller than 0.01; and/or wherein the switching period of the switch (12, 13) is equal to or larger than the duration of the inrush current.

7. The power supply input circuit (10) of any one of the preceding claims, wherein the switch (12, 13) is on one side connectable to the power source (20) and on the other side connected to the input capacitor (11).

8. The power supply input circuit (10) of any one of the preceding claims, wherein the input capacitor (11) is one side connected to the switch (12, 13) and on the other side connected to ground.

9. The power supply input circuit (10) of any one of the preceding claims,
wherein the switch (12, 13) comprises a field-effect transistor, FET, (12) preferably a metal-oxide-semiconductor field-effect transistor, MOSFET.

10. The power supply input circuit (10) of claim 9, wherein the side of the drain of the FET (12) is connectable to the power source (20) and the side of the source of the FET (12) is connected to the input capacitor (11).

11. The power supply input circuit (10) of claim 9 or 10, wherein the gate of the FET (12) is driven with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz.

12. A power supply system (100) comprising a power supply input circuit (10) according to any one of claims 1 to 11 and a power source (20), wherein a switch (12, 13) of the power supply input circuit (10) is connected between the power source (20) and an input capacitor (11) of the power supply input circuit (10).

13. The power supply system (100) of claim 12, wherein power source (20) comprises a voltage source, wherein the power source (20) preferably comprises a battery for a vehicle, and more preferably an automobile battery.

14. Use of the power supply input circuit (10) according to any one of claims 1 to 11 for handling inrush currents generated by a power source (20).

15. Method for handling inrush currents, comprising
connecting a first terminal of a power supply input circuit (10) to a power source (20);
connecting a switch (12, 13) of the power supply input circuit (10) to at least one input capacitor (11) of the power supply input circuit (10); and actuating the switch (12, 13) to switch between an on-state and an off-state such that an inrush current generated by the power source (20) is split into a plurality of pulses, wherein a duration of the on-state of the switch (12, 13) is shorter than a duration of the inrush current.

## Amended claims

### Amended claims in accordance with Rule 137(2) EPC.

1. Power supply input circuit (10) for handling inrush currents, wherein the power supply input circuit (10) comprises a first terminal and second terminal, wherein the first terminal of the power supply input circuit (10) is connectable to a power source (20) and the second terminal of the power supply input circuit (10) is connectable to another electronic circuit, preferably a power supply circuit and/or an electronic circuit in a vehicle, the power supply input circuit (10) comprising:
at least one input capacitor (11), and
a switch (12, 13), wherein the switch (12, 13) is connected to the input capacitor (11), wherein the switch (12, 13) is configured to switch between an on-state and an off-state such that an inrush current generated by the power source (20) is split into a plurality of pulses, wherein a duration of the on-state of the switch (12, 13) is shorter than a duration of the inrush current, wherein the duration of the inrush current refers to the time to charge the input capacitor (11) by the inrush current without interruptions and within a single charging process,
wherein the duration of the on-state of the switch (12, 13) is equal to or less than 10 µs.

2. The power supply input circuit (10) of claim 1, wherein the turn-on edge of the on-state of the switch (12, 13) is controlled such that an amplitude of pulses of the plurality pulses is adjusted, preferably reduced.

3. The power supply input circuit (10) of claim 1 or 2, wherein the charging time of the input capacitor (11) is predetermined or adjustable, wherein the frequency and the duration of the on-state of the switch (12, 13) is selected such that the charging time for the input capacitor (11) is met.

4. The power supply input circuit (10) of any one of the preceding claims, wherein the conducting state of the on-state of the switch (12, 13) is controlled such that the amplitude of pulses of the plurality pulses is adjusted, preferably reduced.

5. The power supply input circuit (10) of any one of the preceding claims, wherein the switch (12, 13) is configured to switch between an on-state and an off-state with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz.

6. The power supply input circuit (10) of any one of the preceding claims, wherein a ratio between the duration of the on-state of the switch (12, 13) and the duration of the inrush current is equal to or smaller than 0.25, preferably equal to or smaller than 0.2, preferably equal to or smaller than 0.1, preferably equal to or smaller than 0.05, preferably equal to or smaller than 0.025, and more preferably equal to or smaller than 0.01; and/or wherein the switching period of the switch (12, 13) is equal to or larger than the duration of the inrush current.

7. The power supply input circuit (10) of any one of the preceding claims, wherein the switch (12, 13) is on one side connectable to the power source (20) and on the other side connected to the input capacitor (11).

8. The power supply input circuit (10) of any one of the preceding claims, wherein the input capacitor (11) is one side connected to the switch (12, 13) and on the other side connected to ground.

9. The power supply input circuit (10) of any one of the preceding claims, wherein the switch (12, 13) comprises a field-effect transistor, FET, (12) preferably a metal-oxide-semiconductor field-effect transistor, MOSFET.

10. The power supply input circuit (10) of claim 9, wherein the side of the drain of the FET (12) is connectable to the power source (20) and the side of the source of the FET (12) is connected to the input capacitor (11).

11. The power supply input circuit (10) of claim 9 or 10, wherein the gate of the FET (12) is driven with a frequency in the range of 1 kHz to 100 MHz, preferably 1 kHz to 50 MHz, preferably 1 kHz to 10 MHz, preferably 1 kHz to 1 MHz, preferably 1 kHz to 100 kHz, and more preferably 5 kHz to 50 kHz.

12. A power supply system (100) comprising a power supply input circuit (10) according to any one of claims 1 to 11 and a power source (20), wherein a switch (12, 13) of the power supply input circuit (10) is connected between the power source (20) and an input capacitor (11) of the power supply input circuit (10).

13. The power supply system (100) of claim 12, wherein power source (20) comprises a voltage source, wherein the power source (20) preferably comprises a battery for a vehicle, and more preferably an automobile battery.

14. Use of the power supply input circuit (10) according to any one of claims 1 to 11 for handling inrush currents generated by a power source (20).

15. Method for handling inrush currents, comprising
connecting a first terminal of a power supply input circuit (10) to a power source (20);
connecting a switch (12, 13) of the power supply input circuit (10) to at least one input capacitor (11) of the power supply input circuit (10); and actuating the switch (12, 13) to switch between an on-state and an off-state such that an inrush current generated by the power source (20) is split into a plurality of pulses, wherein a duration of the on-state of the switch (12, 13) is shorter than a duration of the inrush current, wherein the duration of the inrush current refers to the time to charge the input capacitor (11) by the inrush current without interruptions and within a single charging process, wherein the duration of the on-state of the switch (12, 13) is equal to or less than 10 µs.
